# EUROPEAN PATENT SPECIFICATION

(11) **EP 1 963 682 B1**
(45) Date of publication and mention of the grant of the patent: **03.06.2009**
(21) Application number: 06820498.1
(22) Date of filing: 12.12.2006
(51) Int. Cl.: F04D 29/38, B64C 11/18, B63H 1/26

(54) **PROPELLER**
PROPELLER
PROPULSEUR

(30) Priority: 22.12.2005 GB 0526182
(43) Date of publication of application: 03.09.2008
(73) Proprietor: Axiom Water Propellers Ltd., The Lakes Northamptonshire NN4 7HB (GB)
(72) Inventor: Watts, Alan Edward, Thrapston, Northants NN14 4JS (GB)
(74) Representative: Hedges, Martin Nicholas
(86) International application number: PCT/GB2006/004641
(87) International publication number: WO 2007/071924

(56) References cited:
- DE-C- 11 624
- US-A- 909 246
- US-A- 3 174 681
- US-A- 5 161 953
- US-A- 6 164 919

## Description

The present invention relates to propellers and in particular although not exclusively to water or marine propellers.

A propeller operates by generating a thrust to drive a body, such as an aircraft or boat, by applying a force to the fluid in which it operates in order to change the momentum of the fluid in the direction opposite to that in which it is desired to drive the body. Each blade of the propeller, screw etc. is inclined to the desired direction of thrust, so that, as it rotates through the fluid, the normal reaction force has a component parallel to the direction of drive, the orientation being set to ensure that this force tends to push the fluid in a direction opposite to the desired direction of travel. Under Newton's first law, action and reaction are equal and opposite, and hence the fluid applies an equal and opposite force to the screw, propeller, etc. which reaction force is transmitted to the body and in turn drives the body through the fluid.

Conventional screw design is based on the works of Archimedes (c.250BC) and was later modified by Francis Petit Smith, and a typical such marine screw comprises a number of blades, normally 2 to 4, which are fixed to a hub either with their longitudinal axis perpendicular to the axis of the hub or inclined thereto towards the back of the craft on which the propeller is attached so as to produce aft rake. The blades are attached to the hub in a symmetrical pattern and each blade typically has a curved outer profile, normally formed by ogival or aerofoil sections, tapers outwardly from root to tip and twist from root to tip so that the tip of the blade has a greater angle of attack to the incident fluid than the root.

This conventional configuration has, however, a number of disadvantages. The shape of the blades tends to generate lift, and the resulting pressure differences can lead to early cavitation. Also, the twist or skew on a typical blade, which results in a variation in pitch along the blade, makes the propeller more complicated and hence more expensive to produce. Whilst attempts have been made over the years to reduce the impact of these drawbacks and also to improve efficiency, reduce cavitation etc of propellers, any improvements that have been achieved have been relatively small, and involved minor variations in blade shape, twist, size and taper without changing the underlying design of the marine screw.

British patent application no. 0411155.5 discloses a propeller blade design comprising a first blade portion having an arcuate cross section and being in the form of a longitudinal segment of a hollow truncated cone defined between two planes which extend longitudinally of the cone, are inclined to each other and which each intersect each other along the longitudinal axis of the cone, and a second blade section which extends adjacent the first blade portion, which is of similar shape to the first blade section with the radius of curvature of the two blade portions being the same at each point along the blade, and the first and second portions being arranged side by side facing opposite directions so as to form a sigmoid cross section.

US 5 161 953 which discloses:
A propeller comprising a hub having a plurality of blades extending therefrom, each blade having a root, a tip, a first blade portion between said root and said tip and a second blade portion between said root and said tip adjacent and substantially parallel to said first blade , said first and second blade portions each having an arcuate concave face, said concave faces of said first and second portions facing in substantially opposite directions such that, in use, said concave face of the first blade portion faces rearwards and said concave face of the second blade portion faces forwards.

According to the present invention, there is provided a propeller comprising a hub having a plurality of blades extending therefrom, each blade having a root, a tip, a first blade portion extending between said root and said tip and a second blade portion extending between said root and said tip adjacent and substantially parallel to said first blade portion, said first and second blade portions each having an arcuate concave face, the radius of curvature of the concave face of said first blade portion being greater than the radius of curvature of the concave face of the second blade portion, said concave faces of said first and second portions facing in substantially opposite directions such that, in use, said concave face of said first blade portion faces rearwards and said concave face of the second blade portion faces forwards.

A propeller in accordance with the invention has the advantage that it is effective across the maximum blade area, thereby improving efficiency, whilst the smaller radius of curvature on the concave face of the second blade portion, which faces forwards and hence operates to provide reverse drive to the craft, reduces the load on the engine and hence increases the life of the engine driving the propeller.

In one embodiment, the radius of curvature of each concave face is substantially constant between the root and tip of the blade. However, in an alternative embodiment, the radius of curvature of each said concave face may decrease towards the root of the blade so as to form a conical concave surface. The blade may optionally twist between root and tip in order to increase efficiency, however it is preferred that each blade is untwisted.

Each of said plurality of blades of the propeller are preferably longitudinally aligned with each other on the hub, but in an alternative embodiment, the blades may be longitudinally offset along the hub.

Due to the difference in the radius of curvature of the two blade portions, the angle subtended by the concave face of the second blade portion is preferably smaller than the angle subtended by the concave face of the first blade portion. For example, in one embodiment, the face of the first blade portion forms a 60 degree arc whilst the face of the second blade portion forms a 45 degree arc.

In order that the invention may be well understood, there will now be described an embodiment thereof, given by way of example, reference being made to the accompanying drawings, in which:
Figure 1 a is a front view of the propeller of the invention;
Figure 1b is a back view of the propeller of Figure 1;
Figure 2 is a cross-sectional illustration of the propeller of Figure 1;

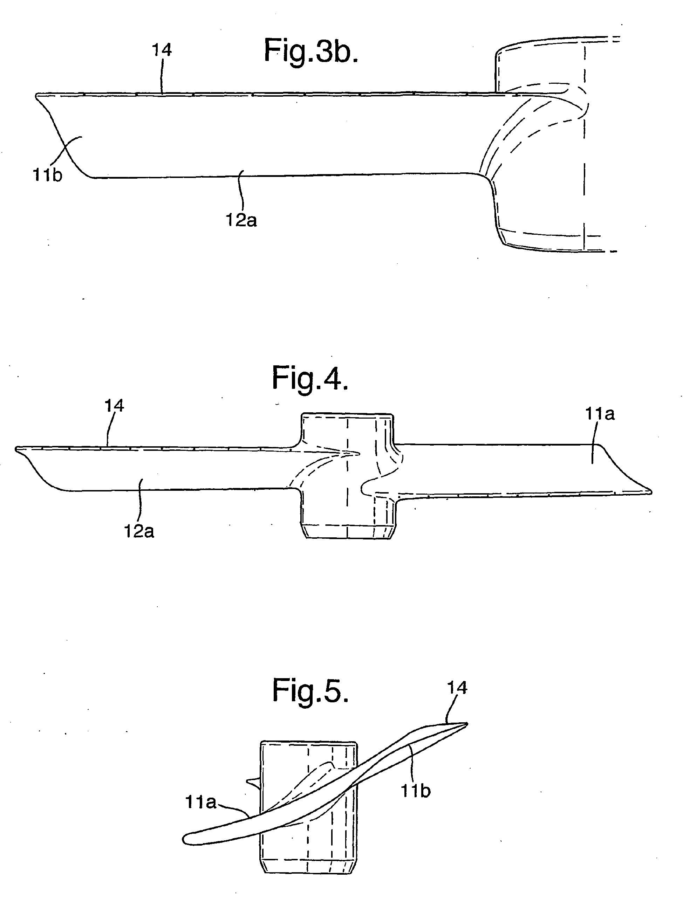

Figures 3 a and 3b are top and bottom views of the propeller of Figure 1; and

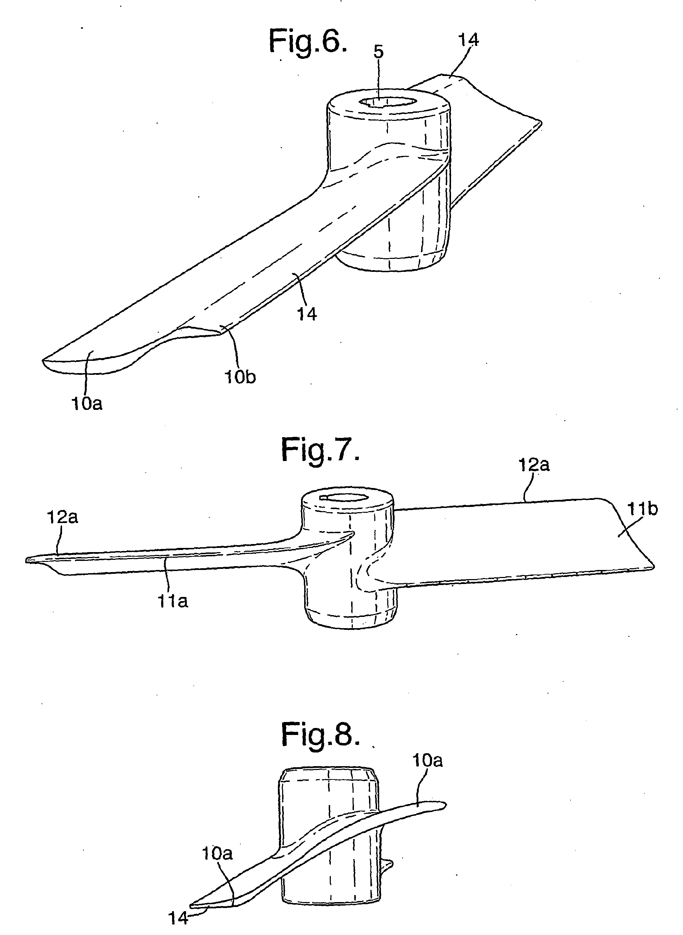

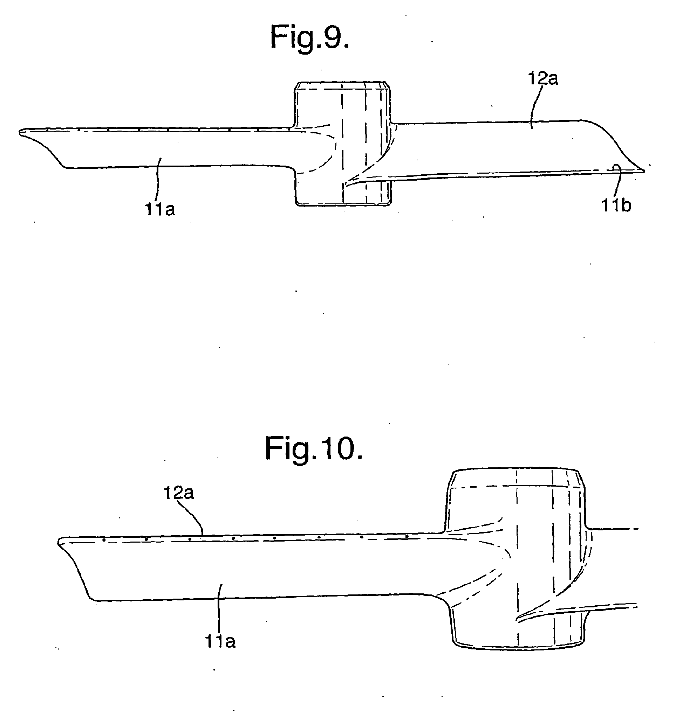

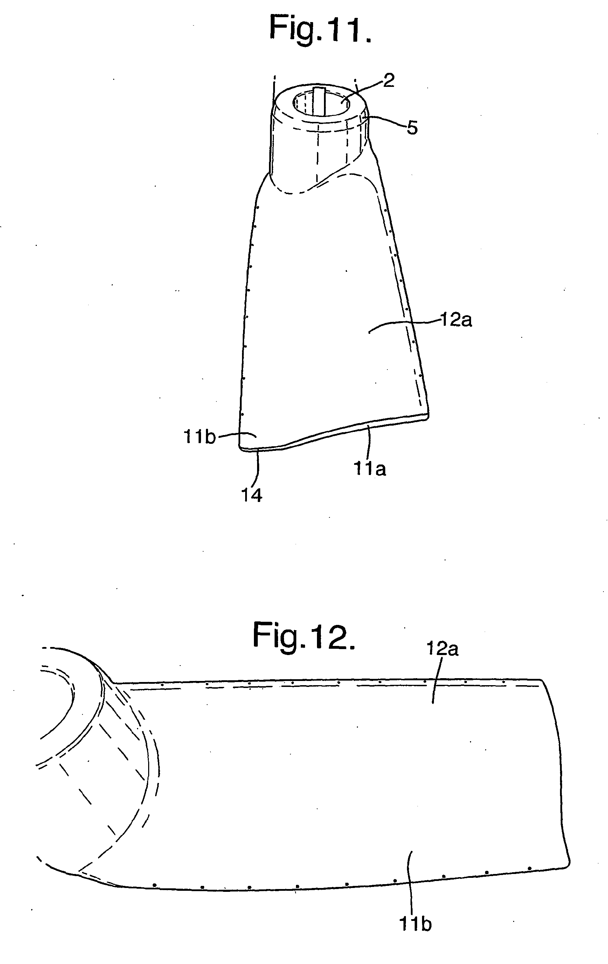

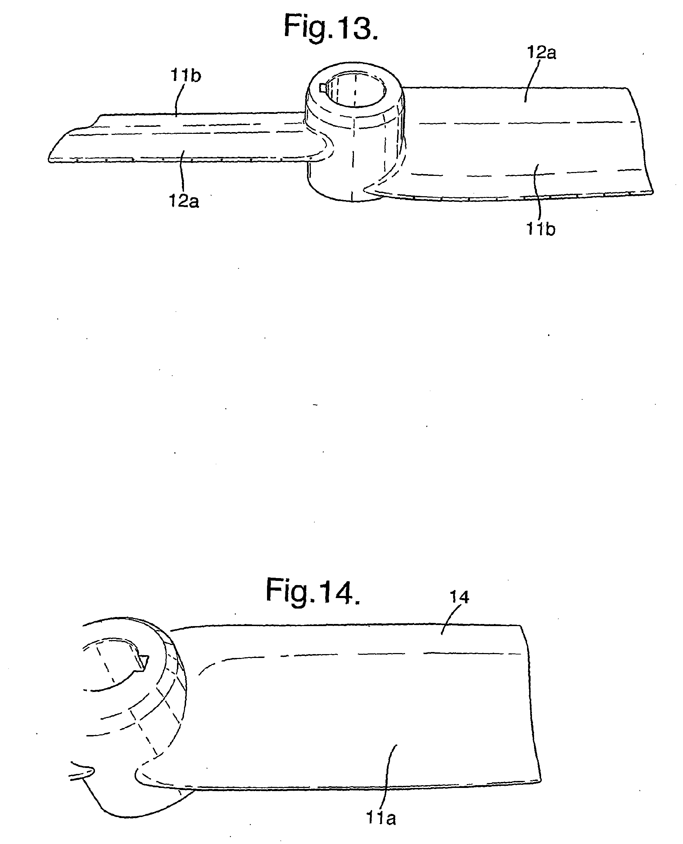

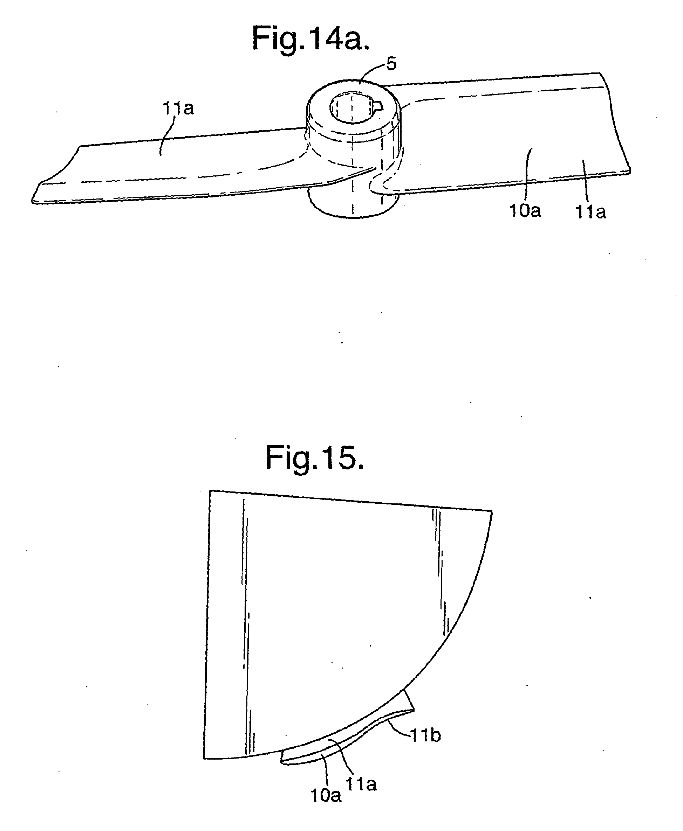

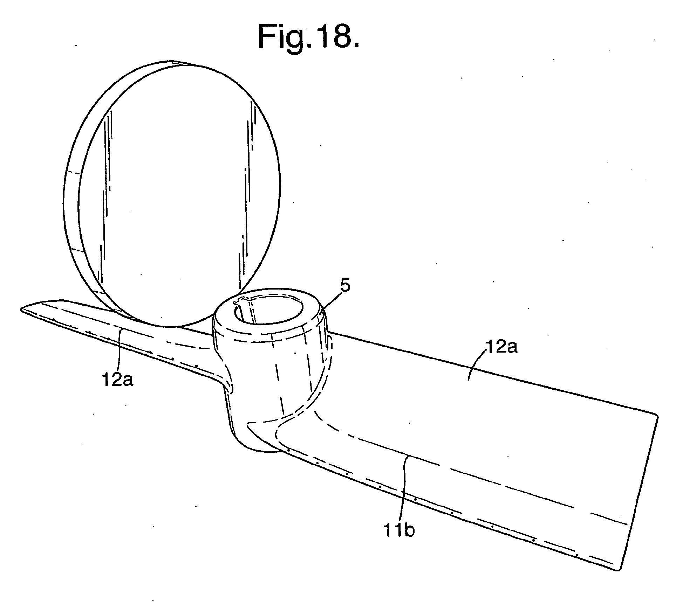

Figures 4 to 18 are various additional views of the propeller of Figure 1.

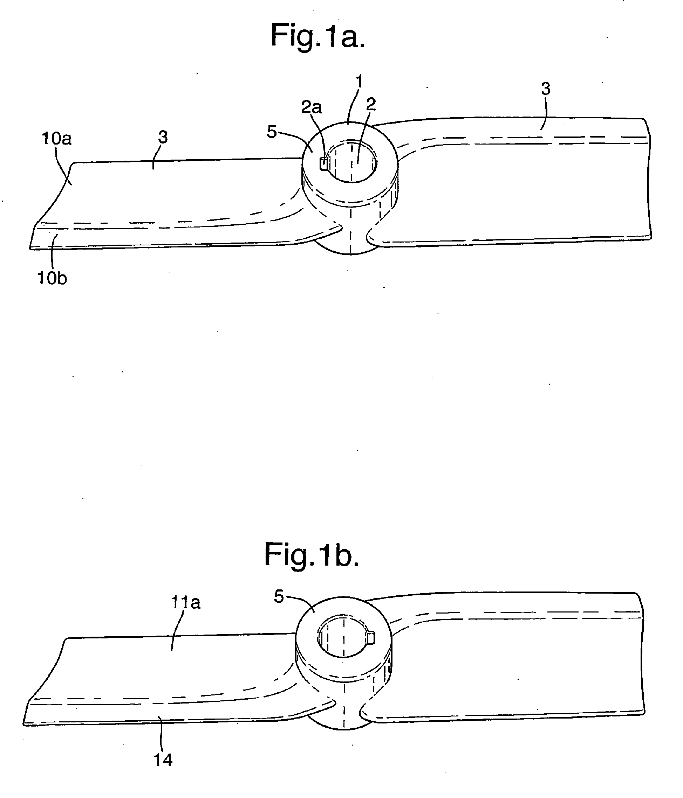

Referring first to Figure 1, there is shown a propeller of the invention comprising a hub 1 having a pair of blades 3 connected to its outer surface 5. The hub 1 has an axial opening 2 extending therethrough which is configured for non-rotatably mounting the propeller on a suitable shaft such as the propeller shaft of a boat. The non-rotatable coupling may be achieved by forming the surface of the through opening as a conical friction surface which frictionally engages a corresponding surface formed on the propeller shaft, by forming teeth on the surface of the through opening which mate with complementary teeth formed on the propeller shaft, or by other drive coupling means well known to the skilled person, such as by using a keyway 2a as shown in Figure 1..

As best shown in Figure 1, the hub 1 takes the form of a hollow cylindrical boss so as to provide a straight outer surface 5, with the blades 3 being mounted with their axis perpendicular to the outer surface 5 and hence the axis of the hub 1. However, in an alternative arrangement, the outer surface of the hub may taper as to set a forwards or rearward rake angle on the blades.

Each blade 3 may be attached to the outer surface 5 of the hub 1 in any well known fashion such as by screw thread, welding, casting as a unitary assembly with the hub etc, and may either be rigidly mounted to as to have a fixed pitch or may be rotatably mounted thereon with conventional means being provided to control the pitch angle of the blades.

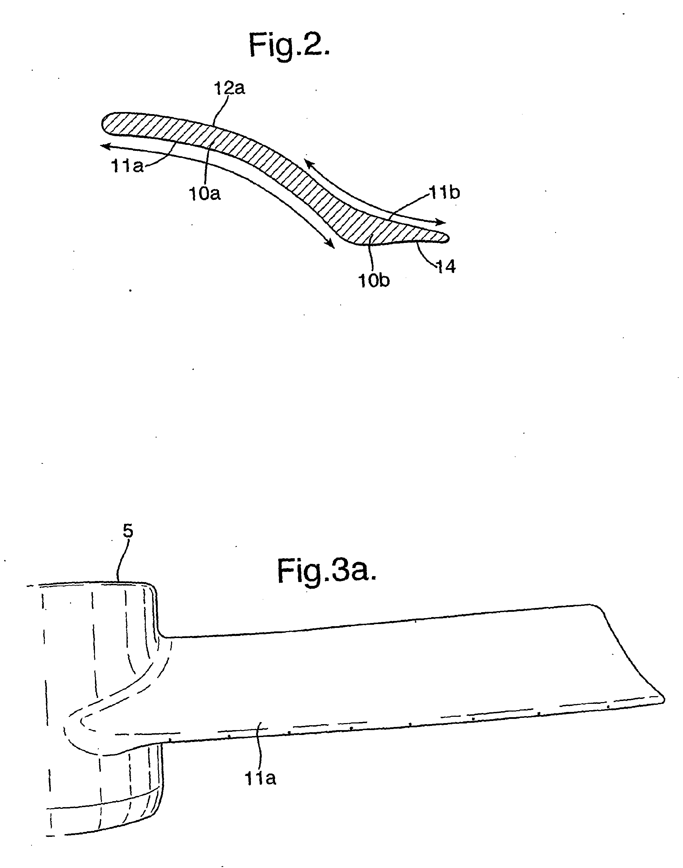

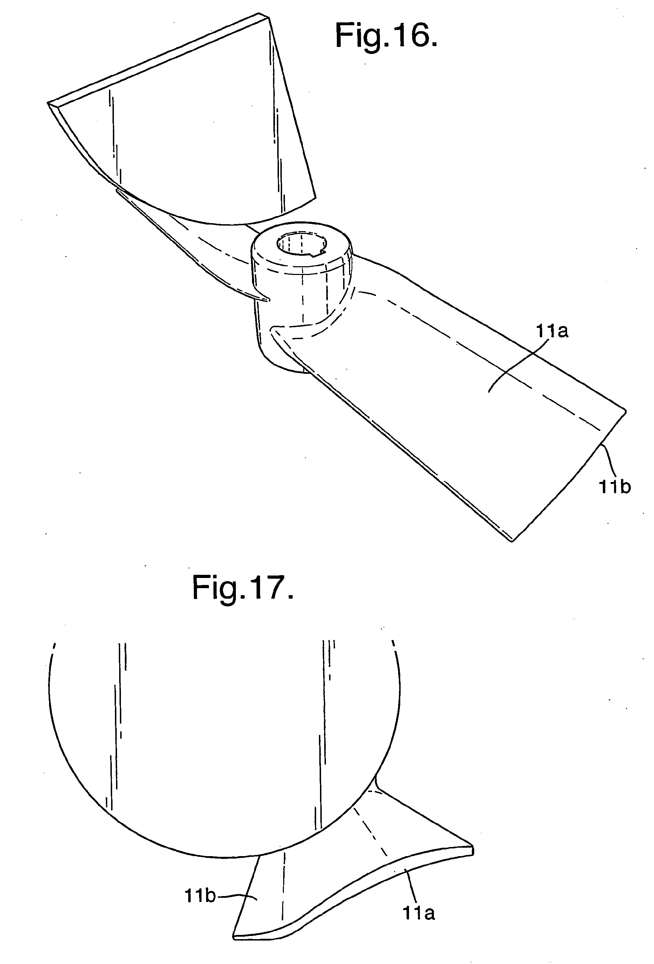

Referring now to Figure 2, it can be seen that each blade 3 is of identical construction, being formed of two sections 10a, 10b which are arranged adjacent to each other, connected together along adjacent longitudinal edges so as to form a general S shaped or sigmoid cross-section. As shown in Figure 2, the two blade sections 10a, 10b each have a concave pressure face 11a, 11b, which face in opposite directions. Each said pressure face 11a, 11b is defined by an arc which is of constant curvature. However, the radius of curvature of the pressure face 11a of the first blade portion 10a, is greater than that of the pressure face 11b of the second blade portion 10b as clearly demonstrated in Figures 16 and 17. The rear face 12a of the first portion is then shaped so that the first portion 10a has a substantially constant thickness, although the thickness varies at the transition to the second portion so as to avoid discontinuities in the surface which might increase cavitation.

As can clearly been seen in Figure 2, the extend of the arc of first portion 10a is greater than that of the second portion - in the illustrated embodiment, the pressure surface of the first portion subtends an arc of 60 degrees whereas that of the second portion subtends an arc of 45 degrees. As a result, the pressure surface of the first portion extends substantially the full height of the blade whereas the pressure surface of the second portion extends only part of the height of the blade - the pressure surface 11b of the second portion then merging into the convex back surface 12a of the first portion 10a, whilst a substantially flat transition surface 14 extends between the end of the pressure surface 11a of the first portion 10a and the end of the pressure surface 11b of the second portion 10b.

In the illustrated embodiment, the radius of curvature of each pressure surface 1 a, 11b does not vary along the length of the blade so that each pressure surface is defined by the curved surface of a segment of a circle.

In use the propeller is oriented with the pressure surface 11a of the first blade portion 10a facing aft .of the craft and hence provides forward thrust, whilst the pressure surface 11b of the second blade portion 10b provides rearward thrust to the craft when the propeller is driven in reverse.

In a variant of the invention which is not illustrated, the blade portions are modified so as to taper outwards from the root towards the tip of the blade, the radius of curvature of each pressure surface, at the same time increasing continuously between the root and the tip. This is achieved by forming each blade portion which its pressure surface being defined by the curved surface of a segment of a hollow frusto-conical body in the manner taught in British application 0411155.5.

## Claims

1. A propeller comprising a hub (1) having a plurality of blades (3) extending therefrom, each blade (3) having a root, a tip, a first blade portion (10a) extending between said root and said tip and a second blade portion (10b) extending between said root and said tip adjacent and substantially parallel to said first blade portion (10a), said first and second blade portions (10a, 10b) each having an arcuate concave face (11a, 11b), the radius of curvature of each concave face (11a, 11b) being substantially constant between the root and tip of the blade (3) and the radius of curvature of the concave face (11a) of said first blade portion (10a) being greater than the radius of curvature of the concave face (11b) of the second blade portion (10b), wherein said concave faces (11a, 11b) of said first and second portions (10a, 10b) faces in substantially opposite directions such that, in use, said concave face (11a) of said first blade portion (10a) faces rearwards and said concave face (11b) of the second blade portion (10b) faces forwards.

2. A propeller according to claim 1, wherein the radius of curvature of each said concave face (11a, 11b) decreases towards the root of the blade (3) so as to form a conical concave surface.

3. A propeller according to claim 1 or claim 2, wherein each blade (3) is untwisted.

4. A propeller according to any of the preceding claims, wherein each of said plurality of blades (3) of the propeller are longitudinally aligned with each other on the hub (1).

5. A propeller according to any of claims 1 to 3, wherein the blades (3) are longitudinally offset along the hub (1).

6. A propeller according to any of the preceding claims, wherein the angle subtended by the concave face (11b) of the second blade portion (10b) is smaller than the angle subtended by the concave face (11a) of the first blade portion (10a).

7. A propeller according to any of the preceding claims, wherein the face (11a) of the first blade portion (10a) forms a 60 degree arc whilst the face (11b) of the second blade portion (10b) forms a 45 degree arc.

## Patentansprüche

1. Propeller, enthaltend ein Mittelstück (1), das eine Vielzahl von Flügeln (3) hat, die sich von diesem erstrecken, wobei jeder Flügel (3) einen Fußpunkt, eine Spitze, einen ersten Flügelabschnitt (10a), der sich zwischen dem Fußpunkt und der Spitze erstreckt, und einen zweiten Flügelabschnitt (10b) hat, der sich zwischen dem Fußpunkt und der Spitze benachbart und im wesentlichen parallel zum ersten Flügelabschnitt (10a) erstreckt, wobei der erste und der zweite Flügelabschnitt (10a, 10b) jeweils eine bogenförmige konkave Fläche (11a, 11b) haben, wobei der Krümmungsradius jeder konkaven Fläche (11a, 11b) im wesentlichen konstant zwischen dem Fußpunkt und der Spitze des Flügels (3) ist und der Krümmungsradius der konkaven Fläche (11a) des ersten Flügelabschnittes (10a) größer ist als der Krümmungsradius der konkaven Fläche (11b) des zweiten Flügelabschnittes (1 0b), wobei die konkaven Flächen (11a, 11b) des ersten und des zweiten Abschnittes (10a, 10b) in im wesentlichen entgegengesetzte Richtungen weisen, so dass bei Verwendung die konkave Fläche (11a) des ersten Flügelabschnittes (10a) nach hinten weist und die konkave Fläche (11b) des zweiten Flügelabschnittes (10b) nach vorne weist.

2. Propeller nach Anspruch 1, bei dem der Krümmungsradius jeder konkaven Fläche (11a, 11b) zum Fußpunkt des Flügels (3) abnimmt, um so eine konische konkave Oberfläche zu bilden.

3. Propeller nach Anspruch 1 oder 2, bei dem jeder Flügel (3) ungedreht ist.

4. Propeller nach einem der vorhergehenden Ansprüche, bei dem sämtliche aus der Vielzahl von Flügeln (3) des Propellers am Mittelstück (1) in Längsrichtung zueinander ausgerichtet sind.

5. Propeller nach einem der Ansprüche 1 bis 3, bei dem die Flügel (3) entlang des Mittelstückes (1) in Längsrichtung versetzt sind.

6. Propeller nach einem der vorhergehenden Ansprüche, bei dem der Winkel, der von der konkaven Fläche (11b) des zweiten Flügelabschnittes (10b) eingeschlossen ist, kleiner ist als der Winkel, der von der konkaven Fläche (11a) des ersten Flügelabschnittes (10a) eingeschlossen ist.

7. Propeller nach einem der vorhergehenden Ansprüche, bei dem die Fläche (11a) des ersten Flügelabschnittes (10a) einen 60°-Bogen bildet, während die Fläche (11b) des zweiten Flügelabschnittes (10b) einen 45°-Bogen bildet.

## Revendications

1. Hélice comprenant un moyeu (1) ayant une pluralité de pales (3) s'étendant depuis le moyeu, chaque pale (3) ayant une emplanture, une extrémité, une première portion de pale (10a) s'étendant entre ladite emplanture et ladite extrémité et une deuxième portion de pale (10b) s'étendant entre ladite emplanture et ladite extrémité adjacente et sensiblement parallèle à ladite première portion de pale (10a), lesdites première et deuxième portions de pale (10a, 10b) ayant chacune une face concave arquée (11a, 11b), le rayon de courbure de chaque face concave (11a, 11b) étant sensiblement constant entre l'emplanture et l'extrémité de la pale (3) et le rayon de courbure de la face concave (11a) de ladite première portion de pale (10a) étant supérieur au rayon de courbure de la face concave (11b) de la deuxième portion de pale (10b), lesdites faces concaves (11a, 11b) desdites première et deuxième portions (10a, 10b) étant dirigées dans des directions sensiblement opposées de sorte que, durant l'utilisation, ladite face concave (11a) de ladite première portion de pale (10a) soit tournée vers l'arrière et que ladite face concave (11b) de ladite deuxième portion de pale (10b) soit tournée vers l'avant.

2. Hélice selon la revendication 1, dans laquelle le rayon de courbure de chacune desdites faces concaves (11a, 11b) diminue en direction de l'emplanture de la pale (3) de manière à former une surface concave conique.

3. Hélice selon la revendication 1 ou 2, dans laquelle chaque pale (3) n'est pas torsadée.

4. Hélice selon l'une quelconque des revendications précédentes, dans laquelle toutes les pales de ladite pluralité de pales (3) de l'hélice sont alignées longitudinalement les unes par rapport aux autres sur le moyeu (1).

5. Hélice selon l'une quelconque des revendications 1 à 3, dans laquelle les pales (3) sont décalées longitudinalement le long du moyeu (1).

6. Hélice selon l'une quelconque des revendications précédentes, dans laquelle l'angle sous-tendu par la face concave (11b) de la deuxième portion de pale (10b) est plus petit que l'angle sous-tendu par la face concave (11a) de la première portion de pale (10a).

7. Hélice selon l'une quelconque des revendications précédentes, dans laquelle la face (11a) de la première portion de pale (10a) forme un arc de 60 degrés tandis que la face (11b) de la deuxième portion de pale (10b) forme un arc de 45 degrés.
